# EUROPEAN PATENT SPECIFICATION

(11) **EP 4 605 239 B1**
(45) Date of publication and mention of the grant of the patent: **02.12.2026**
(21) Application number: 23790290.3
(22) Date of filing: 13.10.2023
(51) Int. Cl.: B32B 27/32, B32B 27/08, C08F 210/16, C08J 5/18, C08L 23/08

(54) **MULTILAYER FILM**
MEHRSCHICHTIGE FOLIE
FILM MULTICOUCHE

(30) Priority: 18.10.2022 EP 22202080
(43) Date of publication of application: 27.08.2025
(73) Proprietor: Borealis GmbH, 1020 Vienna (AT)
(72) Inventor: BERTHELIER, Anthony, 92400 Courbevoie (FR); BORAGNO, Luca, 4021 Linz (AT); SCHUSTER, Gerhard, 4209 Engerwitzdorf (AT)
(74) Representative: TBK
(86) International application number: PCT/EP2023/078548
(87) International publication number: WO 2024/083689

(56) References cited:
- WO-A1-2020/207940
- WO-A1-2022/175326
- US-B2- 11 180 586

## Description

### Field of the Invention

The present invention pertains to a multilayer film comprising a core layer (C), a first outer layer (O1) and a second outer layer (O2), sandwiching the core layer (C). The present invention further pertains to a heavy duty shipping sack (HDSS) comprising the mentioned multilayer film.

### Background of the Invention

It is a long existing need to provide packaging material with desired properties depending on the end applications, such as mechanical properties in terms of tensile modulus, tear resistance, dart drop impact, and toughness, or processability for instance in terms of bubble stability during blown film extrusion. In addition to those needs with the performance of the packaging material, recent years have brought environmental concerns guiding the producers of packaging materials to focus on the sustainability aspects.

Multilayer films where each layer may serve a different purpose ensuring desired functional properties are often used in the industrial packaging. Being produced by co-extrusion, such films provide a flexibility of design, reflecting the needs of the packaging industry. However, it still remains challenging to design a multilayer film that has increased sustainability.

WO 2006/039603 A1 discloses a multilayer film suitable to be used in applications such as pouch, comprising at least three layers; two of which are outer layers sandwiching a core layer. Each of the outer layers independently comprise LLDPE component, while the core layer comprises a multimodal polyethylene component with a specific design. However, it does not focus on increasing the sustainability of the film, but rather deals with improving the film properties by the design of each layers.

WO 2020/219378 A1 also discloses a multilayer film structure suitable to be formed into a stretch hood, focusing on increasing the tear resistance in the machine direction of the film. The multilayer film comprises a first outer layer, a first inner layer, a core layer, a second inner layer and a second outer layer, in the given order. Although it is disclosed in the mentioned document that usage of raw material is reduced by incorporating less raw material, it does not mention the usage of recyclates within the multilayer structure.

WO 2020 207940 A1 discloses a collation shrink film. Specifically, a multilayer collation shrink film is disclosed comprising at least the following layers: A) a layer comprising at least the following components: a1) a multimodal polymer of ethylene with at least two different comonomers selected from alpha-olefins having from 4 to 10 carbon atoms, which multimodal polymer of ethylene has a density in the range from 910 to 935 kg/m3, and a Mw/Mn of 2 to 8; a2) a multimodal terpolymer of ethylene and two alpha olefin comonomers wherein the multimodal terpolymer has a density in the range from 930 to 950 kg/m3 and a Mw/Mn of 10 to 20; and a3) LORE; B) a layer comprising at least the following components: b1) recycled LORE; and b2) a multimodal terpolymer of ethylene and two alpha olefin comonomers wherein the multimodal terpolymer has a density in the range from 930 to 950 kg/m3 and a Mw/Mn of 10 to 20.

WO 2022 175326 A1 discloses a high-stiff oriented polyethylene film for sustainable packaging. Specifically, a uniaxially oriented polyethylene film is disclosed, comprising multiple layers including an inner surface layer (I), an outer surface layer (O) and a core layer (C), wherein at least one of the multiple layers is made of a composition comprising from 70 to 100 wt.% of a multimodal high density polyethylene (HDPE) polymer component (PE1), based on the total weight of the respective layer composition, the PE1 component having: a) a melt flow rate MFR2 of from 0.1 to 2.0 g/10min; b) a melt flow rate MFR5 of from 1.0 to 5.0 g/10min; c) a melt flow rate ratio (MFR21/MFR2) of from 30 to 90, the melt flow rates being determined according to ISO 1133; d) a density of more than or equal to 950 kg/m3; and e) a molecular weight distribution (Mw/Mn) of from 8 to 20, determined according to ISO 16014; and wherein the polyethylene film has a tensile modulus (1% secant) in machine direction (MD) of at least 1500 MPa, determined according to ASTM D882, and a tensile strength in machine direction (MD) of at least 160 MPa, determined according to ISO 527-3.

US 11 180 586 B2 discloses a process for producing polyolefin film composition and films prepared thereof. Specifically, a process for producing a multimodal ethylene polymer composition is disclosed suitable for producing films by blow moulding and comprising the steps of (i) homopolymerising ethylene or copolymerising ethylene and an alpha-olefin comonomer in a first polymerisation step in the presence of a silica supported Ziegler-Natta catalyst to produce a first ethylene homo- or copolymer (PEI) having a density of from 940 to 980 kg/m3 and a melt flow rate MFR2 of from 2 to 1000 g/10 min, provided that if the first ethylene homo- or copolymer (PE1) is a copolymer, MFR2 thereof is in the range of 2 to 100 g/10 min; (ii) homopolymerising ethylene or copolymerising ethylene and an alpha-olefin comonomer in a second polymerisation step in the presence of the first ethylene homo- or copolymer to produce a first ethylene polymer mixture (PEM1) comprising the first ethylene homo- or copolymer and a second ethylene homo- or copolymer (PE2), said first ethylene polymer mixture having a density of from 940 to 980 kg/m3 and a melt flow rate MFR2 of from 10 to 1000 g/10 min; (iii) copolymerising ethylene and an alpha-olefin comonomer in a third polymerisation step in the presence of the first ethylene polymer mixture (PEM1) to produce a second ethylene polymer mixture (PEM2) comprising the first ethylene polymer mixture (PEM1) and a third ethylene copolymer (PE3), said second ethylene polymer mixture (PEM2) having a density of from 915 to 940 kg/m3 and a melt flow rate MFR5 of from 0.3 to 5 g/10 min, and wherein the second ethylene polymer mixture comprises from 10 to 35% by weight of the first ethylene homo- or copolymer, from 10 to 35% by weight of the second ethylene homo- or copolymer and from 45 to 70% by weight of the third ethylene copolymer.

Hence, it is the aim of the present invention to provide a packaging solution focusing on increasing the sustainability, while at the same time ensuring the well-established requirements of the industry such as mechanical properties and processability of a film. In particular, it is the aim of the present invention to provide a multilayer film suitable for use in a heavy duty shipping sack (HDSS) having desirable mechanical properties in terms of dart drop impact, tensile modulus and tear resistance and increased sustainability with the usage of recyclates in the film structure successfully.

### Summary of the Invention

The present invention pertains to a multilayer film, comprising:
**A)** a first outer layer (O1) and a second outer layer (O2), wherein the first (O1) and/or second (O2) outer layers comprise(s)
   **A1)** a bimodal ethylene terpolymer, with a density of from 910 to 930 kg/m³ determined according to ISO 1183 and an MFR₂ measured according to ISO 1133 (190 °C, 2.16 kg) from 0.5 to 10 g/10 min, comprising at least a C₄-C₁₂ alpha-olefin comonomer, and
   **A2)** a first multimodal ethylene copolymer (CP1), with a density of from 930 to 950 kg/m³ determined according to ISO 1183 and an MFR₅ measured according to ISO 1133 (190 °C, 5.00 kg) from 0.5 to 10 g/10 min, comprising at least a first C₄-C₁₂ alpha-olefin comonomer,
**B)** a core layer (C), sandwiched between the first (O1) and the second (O2) outer layers, wherein the core layer (C) comprises
   **B1)** a recycled LDPE with a density of from 910 to 940 kg/m³ determined according to ISO 1183 and an MFR₂ measured according to ISO 1133 (190 °C, 2.16 kg) from 0.1 to 10 g/10 min, and
   **B2)** a second multimodal ethylene copolymer (CP2), with a density of from 930 to 950 kg/m³ determined according to ISO 1183 and an MFR₅ measured according to ISO 1133 (190 °C, 5.00 kg) from 0.5 to 10 g/10 min, comprising at least a first C₄-C₁₂ alpha-olefin comonomer

wherein the first multimodal ethylene copolymer (CP1) and/or the second multimodal ethylene copolymer (CP2) is/are trimodal comprising:
   - a first ethylene homopolymer in an amount from 10 to 30 wt.-%, more preferably from 15 to 25 wt.-%;
   - a second ethylene homopolymer having an MFR₂ which is at least 50 g/10 min higher than the MFR₂ of component a), measured according to ISO 1133 (190 °C, 2.16 kg), in an amount from 15 to 35 wt.-%, more preferably from 20 to 30 wt.-%; and
   - a third ethylene copolymer with at least a first C₄-C₁₂ alpha-olefin comonomer, in an amount from 35 to 75 wt.-%, more preferably from 45 to 65 wt.-%;
wherein the amounts are based on the total weight of the first multimodal ethylene copolymer (CP1) and/or the second multimodal ethylene copolymer (CP2).

The present invention further pertains to a heavy duty shipping sack (HDSS) comprising the multilayer film according to the present invention.

### Detailed Description

### Definitions

All the terms used herein are to be understood in their general meaning known to the skilled person in the art. In order to be more precise, the following terms will have the meaning as described hereinbelow.

The term "multilayer film" as used herein refers to a film with a layered structure, i.e., comprising more than one layers.

The term "multimodal" as used herein refers to a polymer having two or more fractions different from each other in at least one property, such as weight average molecular weight or comonomer content. The molecular weight distribution curve of such multimodal polymers (graph of polymer weight fraction vs. molecular weight) exhibit two or more maxima depending on the modality, or such curve is distinctly broadened in comparison with the curves of individual fractions. When the polymer contains two different fractions, it is called "bimodal", similarly when it contains three different fractions, it is called "trimodal".

The term "ethylene copolymer" as used herein refers to an ethylene polymer containing ethylene and at least one comonomer. The term "ethylene terpolymer", on the other hand, refers to an ethylene polymer containing two different comonomers.

The term "recycled LDPE" as used herein refers to a recycled polymer material comprising at least 80 wt.-%, preferably at least 85 wt.-%, more preferably at least 90 wt.-% and most preferably at least 95 wt.-% of low density polyethylene, based on the total weight of the recycled low density polyethylene. Accordingly, the recycled LDPE may comprise up to 20 wt.-%, preferably up to 15 wt.-%, more preferably up to 10 wt.-% and most preferably up to 5 wt.-%, based on the total weight of the recycled low density polyethylene, of other (preferably recycled) polymer components such as for example LLDPE, MDPE and HDPE.

Recycled polymer material is a polymer material that is recovered from post-consumer waste (PCR) and/or industrial waste. Post-consumer waste refers to objects having completed at least a first use cycle (or life cycle), i.e., having already served their first purpose; while industrial waste refers to the manufacturing scrap which does normally not reach a consumer.

### Multilayer film

The multilayer film according to the present invention comprises:
**A)** a first outer layer (O1) and a second outer layer (O2), wherein the first (O1) and/or second (O2) outer layers comprise(s)
   **A1)** a bimodal ethylene terpolymer, with a density of from 910 to 930 kg/m³ determined according to ISO 1183 and an MFR₂ measured according to ISO 1133 (190 °C, 2.16 kg) from 0.5 to 10 g/10 min, comprising at least a C₄-C₁₂ alpha-olefin comonomer, and
   **A2)** a first multimodal ethylene copolymer (CP1), with a density of from 930 to 950 kg/m³ determined according to ISO 1183 and an MFR₅ measured according to ISO 1133 (190 °C, 5.00 kg) from 0.5 to 10 g/10 min, comprising at least a first C₄-C₁₂ alpha-olefin comonomer,
**B)** a core layer (C), sandwiched between the first (O1) and the second (O2) outer layers, wherein the core layer (C) comprises
   **B1)** a recycled LDPE with a density of from 910 to 940 kg/m³ determined according to ISO 1183 and an MFR₂ measured according to ISO 1133 (190 °C, 2.16 kg) from 0.1 to 10 g/10 min, and
   **B2)** a second multimodal ethylene copolymer (CP2), with a density of from 930 to 950 kg/m³ determined according to ISO 1183 and an MFR₅ measured according to ISO 1133 (190 °C, 5.00 kg) from 0.5 to 10 g/10 min, comprising at least a first C₄-C₁₂ alpha-olefin comonomer

wherein the first multimodal ethylene copolymer (CP1) and/or the second multimodal ethylene copolymer (CP2) is/are trimodal comprising:
   - a first ethylene homopolymer in an amount from 10 to 30 wt.-%, more preferably from 15 to 25 wt.-%;
   - a second ethylene homopolymer having an MFR₂ which is at least 50 g/10 min higher than the MFR₂ of component a), measured according to ISO 1133 (190 °C, 2.16 kg), in an amount from 15 to 35 wt.-%, more preferably from 20 to 30 wt.-%; and
   - a third ethylene copolymer with at least a first C₄-C₁₂ alpha-olefin comonomer, in an amount from 35 to 75 wt.-%, more preferably from 45 to 65 wt.-%;
wherein the amounts are based on the total weight of the first multimodal ethylene copolymer (CP1) and/or the second multimodal ethylene copolymer (CP2).

The outer layers (O1, O2) of the multilayer film according to the present invention sandwich the core layer (C), meaning that the core layer (C) is covered by the first (O1) and the second (O2) outer layers on both sides.

The multilayer film according to the present invention may be produced by co-extruding the layers. In such a process, the following steps are preferably followed:
a) feeding the components making up the polymer blend for each of the layers to a blown-film line,
b) co-extruding the multilayer film on the blown-film line.

When blends are fed in the step a), additives such as antioxidants, process stabilizers, pigments, UV-stabilizers and other additives known in the art may be added.

It is preferred when the blend for the first outer layer (O1) and/or the second outer layer (O2) comprise(s) additives up to 10 wt.-%, and more preferably up to 7 wt.-%, based on the total weight of the blend making up the first outer layer (O1) and/or the second outer layer (O2).

It is also preferred when the blend for the core layer (C) comprises additives up to 10 wt.-%, more preferably up to 7 wt.-%, based on the total weight of the blend making up the core layer (C).

Co-extrusion as mentioned in step b) above is well-known in the art and carried out by extruding at least two polymers melt streams in a simultaneous manner through a multichannel tubular, annular or circular die to form a tube which is blown-up, inflated and/or cooled with air (or a combination of gases) to form the film.

Blown coextrusion of step b) as described above is preferably conducted at a temperature from 160°C to 240°C, while the subsequent cooling is preferably conducted by a blowing gas (for instance, air) at a temperature from 10 to 50°C to provide a frost line height of 1 to 8 times the diameter of the die.

The blow up ratio (BUR) should generally be in the range 1.2 to 6, preferably 1.5 to 4.

Preferably, the multilayer film according to the present invention has a dart drop impact (DDI) determined on a 110 µm blown film according to ASTM D1709 from 130 to 500 g, more preferably from 150 to 400 g and most preferably from 150 to 350 g.

Preferably, the multilayer film according to the present invention has a relative tear resistance in machine direction (MD) determined on a 110 µm blown film according to ISO 6383/2 from 20 to 250 N/mm, more preferably from 25 to 150 N/mm and/or a relative tear resistance in transverse direction (TD) determined on a 110 µm blown film according to ISO 6383/2 from 200 to 450 N/mm, more preferably from 270 to 400 N/mm.

It is also preferred when the multilayer film according to the present invention has a tensile modulus in machine direction (MD) determined on a 110 µm blown film according to ISO 527-3 from 350 to 580 MPa, more preferably from 400 to 550 MPa and/or a tensile modulus in transverse direction (TD) determined on a 110 µm blown film according to ISO 527-3 from 400 to 700 MPa, more preferably from 500 to 650 MPa.

The multilayer film according to the present invention preferably has a thickness from 10 to 500 µm, more preferably from 50 to 350 µm, and most preferably from 70 to 150 µm.

The multilayer film according to the present invention preferably comprises from 10 to 70 wt.-%, more preferably from 20 to 60 wt.-%, and most preferably from 25 to 50 wt.-% of recycled LDPE, based on the total weight of the polymer blend used to make up the multilayer film.

### Outer Layers (O1 and 02)

The first and the second outer layers (O1, O2) of the present invention sandwiches the core layer (C) regardless of any or both of them being (an) outermost layer. In an embodiment of the invention the outer layers may however be the outermost layers.

The first (O1) and/or the second (O2) outer layers according to the present invention comprise(s):
**A1)** a bimodal ethylene terpolymer, with a density of from 910 to 930 kg/m³ determined according to ISO 1183 and an MFR₂ measured according to ISO 1133 (190 °C, 2.16 kg) from 0.5 to 10 g/10 min, comprising at least a C₄-C₁₂ alpha-olefin comonomer, and
**A2)** a first multimodal ethylene copolymer (CP1), with a density of from 930 to 950 kg/m³ determined according to ISO 1183 and an MFR₅ measured according to ISO 1133 (190 °C, 5.00 kg) from 0.5 to 10 g/10 min, comprising at least a first C₄-C₁₂ alpha-olefin comonomer.

It is preferred when the first (O1) and/or the second (O2) outer layers has/have a thickness from 2 to 100 µm, more preferably from 5 to 80 µm, and most preferably from 10 to 50 µm. It is particularly preferred that the first (O1) and/or the second (O2) outer layers have the same thickness.

It is preferred when the first outer layer (O1) and the second outer layer (O2) have the same composition, i.e., made of same polymers with the same recipe.

### Bimodal ethylene terpolymer

The bimodal ethylene terpolymer of the first (O1) and/or the second (O2) outer layer(s) preferably comprises 1-butene as the C₄-C₁₂ alpha-olefin comonomer.

It is preferred that the bimodal ethylene terpolymer of the first (O1) and/or the second (O2) outer layer(s) further comprises a second comonomer, that is a C₆-C₂₀ alpha-olefin comonomer, preferably 1-hexene. It is the most preferred that the bimodal ethylene terpolymer comprises 1-butene and 1-hexene as comonomers, i.e., it is a terpolymer of ethylene/1-butene/1-hexene.

The bimodal ethylene terpolymer of the first (O1) and/or the second (O2) outer layer(s) preferably has a density of from 912 to 925 kg/m³, more preferably from 915 to 920 kg/m³ as determined according to ISO 1183.

The bimodal ethylene terpolymer of the first (O1) and/or the second (O2) outer layer(s) preferably has an MFR₂ measured according to ISO 1133 (190 °C, 2.16 kg) from 0.8 to 5.0 g/10 min, more preferably from 1.0 to 3.0 g/10 min, and most preferably from 1.2 to 2.0 g/10 min.

The bimodal ethylene terpolymer may comprise additives such as antioxidants, process stabilizers, pigments, UV-stabilizers and other additives known in the art.

Preferably, in the first (O1) and/or the second (O2) outer layer(s), the bimodal ethylene terpolymer is present in an amount from 10 to 50 wt.-%, more preferably from 20 to 45 wt.-%, and most preferably from 25 to 38 wt.-%, based on the total weight of the first (O1) and/or the second (O2) outer layers.

Commercially available bimodal ethylene terpolymers are also preferred to be used in the multilayer film according to the present invention, such as Anteo^{™} from Borealis or Borouge having the properties as required herein, in particular Anteo^{™} FK 1820.

### The first and second multimodal ethylene copolymer (CP1, CP2)

According to the present invention, the first multimodal ethylene copolymer (CP1) and/or the second multimodal ethylene copolymer (CP2) according to the present invention is/are trimodal, comprising:
- a first ethylene homopolymer in an amount from 10 to 30 wt.-%, more preferably from 15 to 25 wt.-%;
- a second ethylene homopolymer having an MFR₂ which is at least 50 g/10 min higher than the MFR₂ of component a), in an amount from 15 to 35 wt.-%, more preferably from 20 to 30 wt.-%; and
- a third ethylene copolymer with at least a first C₄-C₁₂ alpha-olefin comonomer, in an amount from 35 to 75 wt.-%, more preferably from 45 to 65 wt.-%;
wherein the amounts are based on the total weight of the first multimodal ethylene copolymer (CP1) and/or the second multimodal ethylene copolymer (CP2).

It is preferred when the first ethylene homopolymer fraction of the first multimodal ethylene copolymer (CP1) and/or the second multimodal ethylene copolymer (CP2) has an MFR₂ measured according to ISO 1133 (190 °C, 2.16 kg) from 50 to 400 g/10 min, more preferably from 100 to 300 g/10 min, and most preferably from 150 to 250 g/10 min.

It is preferred when the second ethylene homopolymer fraction of the first multimodal ethylene copolymer (CP1) and/or the second multimodal ethylene copolymer (CP2) has an MFR₂ determined according to ISO 1133 (190 °C, 2.16 kg) from 100 to 900 g/10 min, more preferably from 300 to 800 g/10 min, and most preferably from 400 to 750 g/10 min.

The first multimodal ethylene copolymer (CP1) and/or the second multimodal ethylene copolymer (CP2) preferably comprise(s) 1-butene as the first C₄-C₁₂ alpha-olefin comonomer.

It is preferred that the first multimodal ethylene copolymer (CP1) and/or the second multimodal ethylene copolymer (CP2) further comprise(s) a second comonomer, that is a C₆-C₂₀ alpha-olefin comonomer, preferably 1-hexene. It is the most preferred that the first multimodal ethylene copolymer (CP1) and/or the second multimodal ethylene copolymer (CP2) comprise(s) 1-butene and 1-hexene as comonomers, i.e., is/are a terpolymer of ethylene/1-butene/1-hexene.

The first multimodal ethylene copolymer (CP1) and/or the second multimodal ethylene copolymer (CP2) preferably has/have a density of from 935 to 948 kg/m³, more preferably from 938 to 945 kg/m³ as determined according to ISO 1183.

The first multimodal ethylene copolymer (CP1) and/or the second multimodal ethylene copolymer (CP2) preferably has/have an MFR₂ measured according to ISO 1133 (190 °C, 2.16 kg) from 0.1 to 3.0 g/10 min, more preferably from 0.2 to 1.5 g/10 min, and most preferably from 0.25 to 0.80 g/10 min.

The first multimodal ethylene copolymer (CP1) and/or the second multimodal ethylene copolymer (CP2) preferably has/have an MFR₅ measured according to ISO 1133 (190 °C, 5.00 kg) from 0.8 to 5.0 g/10 min, more preferably from 1.0 to 3.0 g/10 min, and most preferably from 1.2 to 2.0 g/10 min.

The first multimodal ethylene copolymer (CP1) and/or the second multimodal ethylene copolymer (CP2) preferably has/have an MFR₂₁ measured according to ISO 1133 (190 °C, 21.6 kg) from 5 to 100 g/10 min, more preferably from 10 to 80 g/10 min, and most preferably from 20 to 60 g/10 min.

It is preferred when the first multimodal ethylene copolymer (CP1) and the second multimodal ethylene copolymer (CP2) have the same composition, i.e., are the same polymer with the same recipe.

In a most preferred embodiment, the first multimodal ethylene copolymer (CP1) and the second multimodal ethylene copolymer (CP2) have the same composition and are trimodal terpolymers comprising the following fractions:
- a first ethylene homopolymer in an amount from 10 to 30 wt.-%, more preferably from 15 to 25 wt.-%;
- a second ethylene homopolymer having an MFR₂ which is at least 50 g/10 min higher than the MFR₂ of component a), in an amount from 15 to 35 wt.-%, more preferably from 20 to 30 wt.-%; and
- a third ethylene terpolymer with 1-hexene and 1-butene as the comonomers, in an amount from 35 to 75 wt.-%, more preferably from 45 to 65 wt.-%;
wherein the amounts are based on the total weight of the trimodal terpolymer.

The first (CP1) and/or the second (CP2) multimodal ethylene copolymer may comprise additives such as antioxidants, process stabilizers, pigments, UV-stabilizers and other additives known in the art.

Preferably, in the first (O1) and/or the second (O2) outer layer(s), the first ethylene copolymer (CP1) is present in an amount from 50 to 90 wt.-%, more preferably from 55 to 80 wt.-%, and most preferably from 62 to 75 wt.-%, based on the total weight of the first (O1) and/or the second (O2) outer layers.

### Process for the first and/or second multimodal ethylene copolymer (CP1 and/or CP2)

The first (CP1) and/or the second (CP2) multimodal ethylene copolymer(s) can be produced according to the process described hereinbelow. It is preferred that both the first (CP1) and the second (CP2) multimodal ethylene copolymers are trimodal and produced according to the process described hereinbelow.

The process for the first (CP1) and/or the second (CP2) multimodal ethylene copolymer(s) comprises the steps:
a) polymerizing ethylene in a first polymerization step in the presence of a Ziegler-Natta polymerization catalyst to produce a first ethylene homopolymer;
b) polymerizing the ethylene in a second polymerization step in the presence of the first ethylene homopolymer to produce a first ethylene polymer mixture comprising the first ethylene homopolymer and a second ethylene homopolymer; and
c) copolymerizing ethylene and at least a first C₄-C₁₂ alpha-olefin comonomer in a third polymerization step in the presence of the first ethylene polymer mixture to produce a second ethylene polymer mixture comprising the first ethylene polymer mixture and a third ethylene copolymer.

In a preferred embodiment, a pre-polymerization step is conducted prior to the polymerization as described in step a). The purpose of the pre-polymerization is to polymerize a small amount of polymer onto the catalyst at a low temperature and/or a low monomer concentration. By pre-polymerization it is possible to improve the performance of the catalyst in slurry and/or modify the properties of the final polymer. The pre-polymerization step is preferably conducted in slurry, for instance in a loop reactor. The pre-polymerization is then preferably conducted in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons.

The temperature in the pre-polymerization step is typically from 0 to 90 °C, preferably from 20 to 80 °C and more preferably from 55 to 75 °C. The pressure is not critical and is typically from 1 to 150 bar, preferably from 40 to 80 bar.

The amount of monomer in pre-polymerization step is typically such that from about 0.1 to 1000 grams of monomer per one gram of solid catalyst component. As the person skilled in the art knows, the catalyst particles recovered from a continuous pre-polymerization reactor do not all contain the same amount of pre-polymer. Instead, each particle has its own characteristic amount which depends on the residence time of that particle in the pre-polymerization reactor. As some particles remain in the reactor for a relatively long time and some for a relatively short time, then also the amount of prepolymer on different particles is different and some individual particles may contain an amount of prepolymer which is outside the above limits. However, the average amount of pre-polymer on the catalyst typically is within the limits specified above.

The molecular weight of the pre-polymer may be controlled by hydrogen as it is known in the art. Further, antistatic additive may be used to prevent the particles from adhering to each other or the walls of the reactor, as disclosed in WO-A-96/19503 and WO-A-96/32420.

If a pre-polymerization step is used, it is preferred that the prepolymer is an ethylene homopolymer. Any pre-polymer component is regarded as part of the first ethylene homopolymer, hence determination of the weight percentage, melt flow rate (MFR), density etc. of the first ethylene homopolymer is conducted based on that.

The catalyst components are preferably all (separately or together) introduced to the pre-polymerization step when a pre-polymerization step is present. However, where the solid catalyst component and the co-catalyst can be fed separately, it is possible that only a part of the co-catalyst is introduced into the pre-polymerization stage and the remaining part into subsequent polymerization stages. Also in such cases it is necessary to introduce co-catalyst into the pre-polymerization stage that a sufficient polymerization reaction is obtained therein.

Typically, the amounts of hydrogen and comonomer are adjusted so that the presence of the prepolymer has no effect on the properties of the final multimodal polymer. Especially, it is preferred that melt flow rate (MFR) of the pre-polymer is greater than the MFR of the final polymer but smaller than the MFR of the polymer produced in the first polymerization stage, i.e. the ethylene homopolymer. It is further preferred that the density of the pre-polymer is greater than the density of the final polymer. Suitably the density is approximately the same as or greater than the density of the polymer produced in the first polymerization stage. Further, typically the amount of the pre-polymer is not more than about 5 % by weight of the multimodal ethylene polymer.

The first polymerization step a) typically operates at a temperature of from 20 to 150 °C, preferably from 50 to 110 °C and more preferably from 60 to 105 °C. The polymerization may be conducted in slurry, gas phase or solution. In the first polymerization step a) the first ethylene homopolymer is produced. The first ethylene homopolymer has an MFR₂ measured according to ISO 1133 (190 °C, 2.16 kg) preferably from 50 to 400 g/10 min, more preferably from 100 to 300 g/10 min, and most preferably from 150 to 250 g/10 min, and a density of from 955 to 980 kg/m³.

The catalyst may be transferred into the first polymerization step a) by any means known in the art. It is thus possible to suspend the catalyst in a diluent and maintain it as homogeneous slurry. Especially preferred it is to use oil having a viscosity from 20 to 1500 mPa.s as diluent, as disclosed in WO-A-2006/063771. It is also possible to mix the catalyst with a viscous mixture of grease and oil and feed the resultant paste into the first polymerization step a). Further still, it is possible to let the catalyst settle and introduce portions of thus obtained catalyst mud into the first polymerization step a) in a manner disclosed, for instance, in EP-A-428054. In the preferred embodiment when the first polymerization step a) is preceded by a pre-polymerization step, the mixture withdrawn from the pre-polymerization step is directed into the first polymerization step a).

Into the first polymerization step a) ethylene, optionally an inert diluent, and optionally hydrogen are introduced. Hydrogen and the α-olefin are introduced in such amounts that the melt flow rate MFR₂ and the density of the first ethylene homopolymer are in the desired values.

The polymerization of the first polymerization step a) may be conducted in slurry. Then the polymer particles formed in the polymerization, together with the catalyst fragmented and dispersed within the particles, are suspended in the fluid hydrocarbon. The slurry is agitated to enable the transfer of reactants from the fluid into the particles.

The polymerization usually takes place in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons. An especially preferred diluent is propane, possibly containing minor amount of methane, ethane and/or butane.

The ethylene content in the fluid phase of the slurry may be from 1 to about 50 % by mole, preferably from about 1.5 to about 20 % by mole and in particular from about 2 to about 15 % by mole. The benefit of having a high ethylene concentration is that the productivity of the catalyst is increased but the drawback is that more ethylene then needs to be recycled than if the concentration was lower.

The slurry polymerization may be conducted in any known reactor used for slurry polymerization. Such reactors include a continuous stirred tank reactor and a loop reactor. It is especially preferred to conduct the polymerization in loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654.

If the first ethylene homopolymer is produced in conditions where the ratio of the α-olefin to ethylene is not more than about 400 mol/kmol, such as not more than 300 mol/kmol, then it is usually advantageous to conduct the slurry polymerization above the critical temperature and pressure of the fluid mixture. Such operation is described in US-A-5391654.

When the first polymerization step a) is conducted as slurry, it is conducted at a temperature within the range of from 50 to 115 °C, preferably from 70 to 110 °C and in particular from 80 to 105 °C. The pressure in the first polymerization step a) is then from 1 to 300 bar, preferably from 40 to 100 bar.

The amount of hydrogen is adjusted based on the desired melt flow rate of the first ethylene homopolymer and it depends on the specific catalyst used. For many generally used Ziegler Natta catalysts the molar ratio of hydrogen to ethylene is for example from 10 to 2000 mol/kmol, preferably from 20 to 1000 mol/kmol and in particular from 40 to 800 mol/kmol.

The polymerization of the first polymerization step a) may also be conducted in gas phase. A preferable embodiment of gas phase polymerization reactor is a fluidised bed reactor. There the polymer particles formed in the polymerization are suspended in upwards moving gas. The gas is introduced into the bottom part of the reactor. The upwards moving gas passes the fluidised bed wherein a part of the gas reacts in the presence of the catalyst and the unreacted gas is withdrawn from the top of the reactor. The gas is then compressed and cooled to remove the heat of polymerization. To increase the cooling capacity it is sometimes desired to cool the recycle gas to a temperature where a part of the gas condenses. After cooling the recycle gas is reintroduced into the bottom of the reactor. Fluidised bed polymerization reactors are disclosed, among others, in US-A-4994534, US-A-4588790, EP-A-699213, EP-A-628343, FI-A-921632, FI-A-935856, US-A-4877587, FI-A-933073 and EP-A-75049.

According to the preferred embodiment of present invention, the polymerization of the first polymerization step a) is conducted in slurry. Further, suitably the polymerization is conducted at a temperature exceeding the critical temperature of the fluid mixture and pressure exceeding the critical pressure of the fluid mixture.

The first polymerization step a) is preferably conducted as a slurry polymerization in liquid diluent at a temperature of from 75 °C to 100 °C, such as from 80 to 95 °C and a pressure of from 30 bar to 100 bar, such as from 40 to 80 bar, like from 50 to 80 bar.

The polymerization rate in the first polymerization step a) is suitably controlled to achieve the desired amount of the first ethylene homopolymer in the second ethylene polymer mixture.

The molar ratio of hydrogen to ethylene is suitably from 50 to 350 mol/kmol, preferably from 75 to 325 mol/kmol in the first polymerization step a).

The polymerization rate is suitably controlled by adjusting the ethylene concentration in the first polymerization step a). When the first polymerization step a) is conducted as slurry polymerization in the loop reactor the mole fraction of ethylene in the reaction mixture is suitably for example from 0.5 to 10 % by mole and preferably from 1 to 8 % by mole.

The amount of first polymer in the multimodal ethylene copolymer (including the pre-polymer, in case the pre-polymerization is conducted prior to the first polymerization step a)) is preferably from 10 to 30 wt.-%, more preferably from to 15 to 25 wt.-% by weight, based on the total weight of the first (CP1) and/or (CP2) multimodal ethylene copolymer.

The second ethylene homopolymer is produced in the second polymerization step b) in the presence of the first ethylene homopolymer.

The second polymerization step b) typically operates at a temperature of from 20 to 150 °C, preferably from 50 to 110 °C and more preferably from 60 to 100 °C. The polymerization may be conducted in slurry, gas phase or solution. In the second polymerization step the second ethylene homopolymer is produced in the presence of the first ethylene homopolymer. The first ethylene homopolymer and the second ethylene homopolymer together form the first ethylene polymer mixture. The first ethylene polymer mixture preferably has a density of from 955 to 980 kg/m³ and an MFR₂ determined according to ISO 1133 (190 °C, 2.16 kg) from 100 to 700, more preferably from 200 to 600, and most preferably from 300 to 400 g/min.

The first ethylene homopolymer is transferred from the first polymerization step a) to the second polymerization step b) by using any method known to the person skilled in the art. If the first polymerization step a) is conducted as slurry polymerization in a loop reactor, it is advantageous to transfer the slurry from the first polymerization step a) to the second polymerization step b) by means of the pressure difference between the first polymerization step a) and the second polymerization step b). The catalyst used in the first polymerization step a) is also transferred to the second step b) therefore.

Into the second polymerization step b), ethylene, optionally an inert diluent, and optionally hydrogen are introduced. Hydrogen is introduced in such amounts that the melt flow rate MFR₂ and the density of the first ethylene polymer mixture are within the desired values.

The polymerization of the second polymerization step b) may be conducted in slurry in the same way as it was discussed above for the first polymerization step a).

The amount of hydrogen in the second polymerization step b) is adjusted based on the desired melt flow rate of the first ethylene polymer mixture and it depends on the specific catalyst used. For many generally used Ziegler Natta catalysts the molar ratio of hydrogen to ethylene is for example from 100 to 2000 mol/kmol, preferably from 200 to 1000 mol/kmol and in particular from 250 to 800 mol/kmol.

The polymerization of the second polymerization step b) may also be conducted in gas phase in the same way as was discussed above for the first polymerization step a). Preferably the second polymerization step b) is conducted in slurry phase as described above.

The molar ratio of hydrogen to ethylene is suitably from 200 to 700 mol/kmol, preferably from 300 to 650 mol/kmol and in particular from 450 to 600 mol/kmol in the second polymerization step b).

Further, suitably the polymerization is conducted at a temperature exceeding the critical temperature of the fluid mixture and pressure exceeding the critical pressure of the fluid mixture.

The polymerization rate in the second polymerization step b) is suitably controlled to achieve the desired amount of the second ethylene homopolymer in the second ethylene polymer mixture. Preferably the first (CP1) and/or the second (CP2) multimodal ethylene copolymer of the invention comprise(s) the second ethylene polymer in an amount from 15 to 35 wt.-%, more preferably from 20 to 30 wt.-%, based on the total weight of the first (CP1) and/or the second (CP2) multimodal ethylene copolymer.

The polymerization rate is suitably controlled by adjusting the ethylene concentration in the second polymerization step b). When the second polymerization step is conducted as slurry polymerization in the loop reactor the mole fraction of ethylene in the reaction mixture is suitably from 2 to 10 % by mole and preferably from 3 to 8 % by mole. The mole fraction of ethylene in % by mole in the reaction mixture in the second polymerization step b) may thereby be higher than the mole fraction of ethylene in % by mole in the reaction mixture in the first polymerization step a).

Ideally, the MFR difference between the first and second homopolymers is as high as possible. It is preferred when the MFR₂ of the second ethylene homopolymer is at least 50 g/10 min higher than the MFR₂ of the first ethylene homopolymer.

It is preferred when the second ethylene homopolymer fraction of the first multimodal ethylene copolymer (CP1) and/or the second multimodal ethylene copolymer (CP2) has an MFR₂ determined according to ISO 1133 (190 °C, 2.16 kg) from 100 to 900 g/10 min, more preferably from 300 to 800 g/10 min, and most preferably from 400 to 750 g/10 min.

In the third polymerization step c), the second ethylene polymer mixture comprising the first ethylene polymer mixture and the third ethylene copolymer is formed.

Into the third polymerization step c), along with the first ethylene polymer mixture and the catalyst from the second polymerization step b), are introduced ethylene, at least one α-olefin having 4 to 12 carbon atoms, hydrogen and optionally an inert diluent. The polymerization in third polymerization step c) is preferably conducted at a temperature within the range of from 50 to 100 °C, preferably from 60 to 100 °C and in particular from 70 to 95 °C. The pressure in the third polymerization step c) is for example from 1 to 300 bar, preferably from 5 to 100 bar.

The polymerization in the third polymerization step c) may be conducted in slurry. The polymerization may then be conducted along the lines as was discussed above for the first and second polymerization steps.

The amount of hydrogen in the third polymerization step c) is adjusted for achieving the desired melt flow rate of the second ethylene polymer mixture. The molar ratio of hydrogen to ethylene depends on the specific catalyst used. For many generally used Ziegler Natta catalysts the molar ratio of hydrogen to ethylene is for example from 0 to 50 mol/kmol, preferably from 3 to 35 mol/kmol.

Furthermore, the amount of the first α-olefin having from 4 to 12 carbon atoms is adjusted to reach the targeted density. The ratio of the α-olefin (could be sum of α-olefins) to ethylene depends on the type of the catalyst and the type of the α-olefin. The ratio is typically for example from 100 to 1000 mol/kmol, preferably from 150 to 800 mol/kmol. If more than one α-olefin is used the ratio of the α-olefin to ethylene is the ratio of the sum of all the α-olefins to ethylene.

The α-olefin is preferably an α-olefin of 4 to 8 carbon atoms or mixtures thereof. In particular 1-butene, 1-hexene and 1-octene and their mixtures are the preferred α-olefins, especially preferred is 1-butene.

As previously noted, it is preferred if the third polymer comprises at least two, ideally two, comonomers. It is preferred when the second comonomer is C₆-C₂₀ α-olefin, more preferably 1-hexene. Hence, it is preferred that these are 1-butene and 1-hexene. It is also preferred if the higher alpha olefin comonomer is present in excess relative to the lower alpha olefin comonomer. For example, if 1-butene and 1-hexene are used in the third polymer there is preferably at least 60 wt.-% 1-hexene and no more than 40 wt.-% 1-butene, e.g. 70 to 90 wt.-% 1-hexene and 10 to 30 wt.-% 1-butene based on the total weight of comonomers present in the third ethylene copolymer. It is preferred therefore if the third copolymer comprises 70 to 90 wt.-% of the higher alpha olefin and 10 to 30 wt.-% of the lower alpha olefin based on the total weight of comonomers present in the third ethylene copolymer.

The polymerization in the third polymerization step may be, and preferably is, conducted in gas phase. In gas phase polymerization using a Ziegler Natta catalyst hydrogen is typically added in such amount that the ratio of hydrogen to ethylene is for example from 3 to 100 mol/kmol, preferably from 4 to 50 mol/kmol for obtaining the desired melt index of the second ethylene polymer mixture. The amount of α-olefin having from 4 to 12 carbon atoms is adjusted to reach the targeted density of the second ethylene polymer mixture. The ratio of the α-olefin to ethylene is typically from 100 to 1000 mol/kmol, preferably from 150 to 800 mol/kmol, further preferred from 150 to 300 mol/kmol. If more than one α-olefin is used the ratio of the α-olefin to ethylene is the ratio of the sum of all the α-olefins to ethylene.

The gas phase reactor preferably is a vertical fluidised bed reactor. There the polymer particles formed in the polymerization are suspended in upwards moving gas. The gas is introduced into the bottom part of the reactor. The upwards moving gas passes the fluidised bed wherein a part of the gas reacts in the presence of the catalyst and the unreacted gas is withdrawn from the top of the reactor. The gas is then compressed and cooled to remove the heat of polymerization. To increase the cooling capacity it is sometimes desired to cool the recycle gas to a temperature where a part of the gas condenses. After cooling the recycle gas is reintroduced into the bottom of the reactor. Fluidised bed polymerization reactors are disclosed, among others, in US-A-4994534, US-A-4588790, EP-A-699213, EP-A-628343, FI-A-921632, FI-A-935856, US-A-4877587, FI-A-933073 and EP-A-75049.

When the second polymerization step b) is conducted in slurry and the third polymerization step c) is conducted in gas phase, the polymer is suitably transferred from the second polymerization step b) into the third polymerization step c) as described in EP-A-1415999. The procedure described in paragraphs [0037] to [0048] of EP-A-1415999 provides an economical and effective method for product transfer.

The conditions in the third polymerization step c) are adjusted so that the second ethylene polymer mixture has a density of from 930 to 950 kg/m³, more preferably from 935 to 948 kg/m³, most preferably from 938 to 945 kg/m³ determined according to ISO 1183 and an MFR₅ determined according to ISO 1133 (190 °C, 5.00 kg) from 0.5 to 10 g/10 min, preferably from 0.8 to 5.0 g/10 min, more preferably from 1.0 to 3.0 g/10 min, and most preferably from 1.2 to 2.0 g/10 min. It is preferred that the first (CP1) and/or the second (CP2) multimodal ethylene copolymer is the same as the second ethylene polymer mixture.

The polymerization rate in the third polymerization step c) is suitably controlled to achieve the desired amount of the third ethylene copolymer in the second ethylene polymer mixture. Preferably the second ethylene polymer mixture contains from 35 to 75 wt.-%, more preferably from 45 to 65 wt.-% of the third ethylene copolymer, based on the total weight of the second ethylene polymer mixture. The polymerization rate is suitably controlled by adjusting the ethylene concentration in the third polymerization step c). When the third polymerization step c) is conducted in gas phase the mole fraction of ethylene in the reactor gas is suitably from 3 to 50 % by mole and preferably from 5 to 15 % by mole.

In addition to ethylene, comonomer and hydrogen the gas also comprises an inert gas. The inert gas can be any gas which is inert in the reaction conditions, such as a saturated hydrocarbon having from 1 to 5 carbon atoms, nitrogen or a mixture of the above-mentioned compounds. Suitable hydrocarbons having from 1 to 5 carbon atoms are methane, ethane, propane, n-butane, isobutane, n-pentane, isopentane and mixtures thereof.

### Post Reactor Treatment

When the first (CP1) and/or the second (CP2) multimodal ethylene copolymer has been removed from the polymerization reactor, it is subjected to process steps for removing residual hydrocarbons from the polymer. Such processes are well known in the art and can include pressure reduction steps, purging steps, stripping steps, extraction steps and so on. Also combinations of different steps are possible.

According to one preferred process a part of the hydrocarbons is removed from the polymer powder by reducing the pressure. The powder is then contacted with steam at a temperature of from 90 to 110 °C for a period of from 10 minutes to 3 hours. Thereafter the powder is purged with inert gas, such as nitrogen, over a period of from 1 to 60 minutes at a temperature of from 20 to 80 °C.

According to another preferred process the polymer powder is subjected to a pressure reduction as described above. Thereafter it is purged with an inert gas, such as nitrogen, over a period of from 20 minutes to 5 hours at a temperature of from 50 to 90 °C. The inert gas may contain from 0.0001 to 5 %, preferably from 0.001 to 1 %, by weight of components for deactivating the catalyst contained in the polymer, such as steam.

The purging steps are preferably conducted continuously in a settled moving bed. The polymer moves downwards as a plug flow and the purge gas, which is introduced to the bottom of the bed, flows upwards.

Suitable processes for removing hydrocarbons from polymer are disclosed in WO-A-02/088194, EP-A-683176, EP-A-372239, EP-A-47077 and GB-A-1272778.

### Catalyst

The polymerization is conducted in the presence of a Ziegler Natta olefin polymerization catalyst. Ziegler Natta catalysts are useful as they can produce polymers within a wide range of molecular weight and other desired properties with a high productivity. Ziegler Natta catalysts used in the present invention are preferably supported on an external support.

Suitable Ziegler Natta catalysts preferably contain a magnesium compound, an aluminium compound and a titanium compound supported on a particulate support.

The particulate support typically used in Ziegler-Natta catalysts comprises an inorganic oxide support, such as silica, alumina, titania, silica-alumina and silica-titania or a MgCl2 based support. The catalyst used in the present invention is supported on an inorganic oxide support. Most preferably the Ziegler-Natta catalyst used in the present invention is supported on silica.

The average particle size of the silica support can be typically from 10 to 100 □m. However, it has turned out that special advantages can be obtained if the support has an average particle size from 15 to 30 µm, preferably from 18 to 25 µm. Alternatively, the support may have an average particle size of from 30 a 80 µm, preferably from 30 to 50 µm. Examples of suitable support materials are, for instance, ES747JR produced and marketed by Ineos Silicas (former Crossfield), and SP9-491, produced and marketed by Grace.

The magnesium compound is a reaction product of a magnesium dialkyl and an alcohol. The alcohol is a linear or branched aliphatic monoalcohol. Preferably, the alcohol has from 6 to 16 carbon atoms. Branched alcohols are especially preferred, and 2-ethyl-1-hexanol is one example of the preferred alcohols. The magnesium dialkyl may be any compound of magnesium bonding to two alkyl groups, which may be the same or different. Butyl-octyl magnesium is one example of the preferred magnesium dialkyls.

The aluminium compound is chlorine containing aluminium alkyl. Especially preferred compounds are aluminium alkyl dichlorides, aluminium dialkyl chlorides and aluminium alkyl sesquichlorides.

The transition metal is preferably titanium. The titanium compound is a halogen containing titanium compound, preferably chlorine containing titanium compound. Especially preferred titanium compound is titanium tetrachloride.

The catalyst can be prepared by sequentially contacting the carrier with the above mentioned compounds, as described in EP-A-688794 or WO-A-99/51646. Alternatively, it can be prepared by first preparing a solution from the components and then contacting the solution with a carrier, as described in WO-A-01/55230.

The Ziegler Natta catalyst is used together with an activator, which is also called as cocatalyst. Suitable activators are metal alkyl compounds, typically Group 13 metal alkyl compounds, and especially aluminium alkyl compounds. They include trialkylaluminium compounds, such as trimethylaluminium, triethylaluminium, tri-isobutylaluminium, trihexylaluminium and tri-n-octylaluminium. Aluminium alkyl compounds may also include alkyl aluminium halides, such as ethylaluminium dichloride, diethylaluminium chloride, ethylaluminium sesquichloride, dimethylaluminium chloride and the like and alkylaluminium oxy-compounds, such as methylaluminiumoxane, hexaisobutylaluminiumoxane and tetraisobutylaluminiumoxane and also other aluminium alkyl compounds, such as isoprenylaluminium. Especially preferred cocatalysts are trialkylaluminiums, of which triethylaluminium, trimethylaluminium and tri-isobutylaluminium are particularly preferred.

The amount in which the activator is used depends on the specific catalyst and activator. Typically triethylaluminium is used in such amount that the molar ratio of aluminium to the transition metal, like Al/Ti, is for example from 1 to 1000, preferably from 3 to 100 and in particular from about 5 to about 30 mol/mol.

### Core layer (C)

The core layer (C) according to the present invention comprises:
**B1)** a recycled LDPE with a density of from 910 to 940 kg/m³ determined according to ISO 1183 and an MFR₂ measured according to ISO 1133 (190 °C, 2.16 kg) from 0.1 to 10 g/10 min, and
**B2)** a second multimodal ethylene copolymer (CP2), with a density of from 930 to 950 kg/m³ determined according to ISO 1183 and an MFR₅ measured according to ISO 1133 (190 °C, 5.00 kg) from 0.5 to 10 g/10 min, comprising at least a first C₄-C₁₂ alpha-olefin comonomer.

It is preferred when the second multimodal ethylene copolymer (CP2) has the same composition as the first multimodal ethylene copolymer (CP1) as described hereinabove.

The core layer (C) preferably comprises the recycled LDPE in an amount from 30 to 90 wt.-%, more preferably from 45 to 80 wt.-% and the second multimodal ethylene copolymer (CP2) in an amount from 5 to 70 wt.-%, more preferably from 7 to 55 wt.-% based on the total weight of the core layer (C).

It is preferred when the core layer (C) has a thickness from 5 to 120 µm, more preferably from 10 to 90 µm, and most preferably from 15 to 50 µm.

### Recycled LDPE

The recycled LDPE preferably has a density of from 915 to 935 kg/m³, more preferably from 920 to 930 kg/m³ as determined according to ISO 1183.

Preferably, the recycled LDPE has an MFR₂ measured according to ISO 1133 (190 °C, 2.16 kg) from 0.2 to 5.0 g/10 min, more preferably from 0.25 to 1.0 g/10 min and most preferably from 0.3 to 0.8 g/10 min.

The recycled LDPE preferably has a melting point (second melting) in the range of from 100 to 140 °C, preferably in the range from 105 to 130°C and more preferably in the range from 108 to 125 °C, determined according to ISO 11357.

As the recycled LDPE, the products NAV 101 and/or CWT 100 LG as supplied by Ecoplast and Borealis may be used. It is particularly preferred when the recycled LDPE is NAV101.

### High density polyethylene

In an embodiment, the core layer (C) may additionally comprise a multimodal high density polyethylene, preferably in an amount from 20 to 60 wt.-%, more preferably from 25 to 50 wt.-%, and most preferably from 30 to 45 wt.-%, based on the total weight of the core layer. It is the most preferred when the high density polyethylene is bimodal. The high density polyethylene present in the layer enhances mechanical properties such as stiffness and creep resistance.

The high density polyethylene preferably has a density from 945 to 970 kg/m³, more preferably from 950 to 965 kg/m³ as determined according to ISO 1183.

The high density polyethylene preferably has an MFR₂ measured according to ISO 1133 (190 °C, 2.16 kg) from 0.1 to 5.0 g/10 min, more preferably from 0.2 to 2.0 g/10 min and most preferably from 0.4 to 1.5 g/10 min.

The high density polyethylene may comprise additives such as antioxidants, process stabilizers, pigments, UV-stabilizers and other additives known in the art.

### Sub-skin layers (S1 and S2)

The multilayer film according to the present invention preferably further comprises a first (S1) and a second (S2) sub-skin layers, placed between the core layer (C) and the first (O1) and the second (O2) outer layers, respectively. In other words, it is preferred when the core layer (C) is covered with sub-skin layers (S1 and S2) on both faces.

Preferably, the first sub-skin layer (S1) and/or the second sub-skin layer (S2) comprise(s):
a) the recycled LDPE with a density of from 910 to 940 kg/m³ determined according to ISO 1183 and an MFR₂ measured according to ISO 1133 (190 °C, 2.16 kg) from 0.1 to 10 g/10 min, and
b) the second multimodal ethylene copolymer (CP2), with a density of from 930 to 950 kg/m³ determined according to ISO 1183 and an MFR₅ measured according to ISO 1133 (190 °C, 5.00 kg) from 0.5 to 10 g/10 min, comprising at least a first C₄-C₁₂ alpha-olefin comonomer.

The recycled LDPE comprised in the first (S1) and/or the second (S2) sub-skin layers preferably has the same composition as the recycled LDPE of the core layer (C). Hence, all description regarding the recycled LDPE given hereinabove under "Core layer (C)" also preferably applies to the recycled LDPE of the sub-skin layer(s) (S1, S2). It is more preferred when the first (S1) and/or the second (S2) sub-skin layers comprise(s) from 10 to 60 wt.-%, more preferably from 20 to 50 wt.-%, and most preferably from 30 to 40 wt.-% of the recycled LDPE, based on the total weight of the first (S1) and/or the second (S2) sub-skin layers.

The second multimodal ethylene copolymer (CP2) comprised in the first (S1) and/or the second (S2) sub-skin layers preferably has the same composition as the second multimodal ethylene copolymer (CP2) of the core layer (C). Hence, all description regarding the second multimodal ethylene copolymer (CP2) given hereinabove under "Core layer (C)" also preferably applies to the second multimodal ethylene copolymer (CP2) of the sub-skin layer(s) (S1, S2). It is more preferred when the first (S1) and/or the second (S2) sub-skin layers comprise(s) from 20 to 80 wt.-%, more preferably from 30 to 70 wt.-%, and most preferably from 40 to 65 wt.-% of second multimodal ethylene copolymer (CP2), based on the total weight of the first (S1) and/or the second (S2) sub-skin layers.

It is preferred when the first sub-skin layer (S1) and/or the second sub-skin layer (S2) has/have a thickness from 5 to 100 µm, more preferably from 10 to 50 µm, and most preferably from 15 to 30 µm. It is particularly preferred when the first sub-skin layer (S1) and the second sub-skin layer (S2) have the same thickness.

It is preferred when the blend for the first sub-skin layer (S1) and/or the second sub-skin layer (S2) comprise(s) additives up to 10 wt.-%, more preferably up to 7 wt.-%, based on the total weight of the blend making up the first sub-skin layer (S1) and/or the second sub-skin layer (S2).

It is the most preferred the first sub-skin layer (S1) and the second sub-skin layer (S2) have the same composition, i.e., comprise the same polymers with the same recipe.

### Heavy Duty Shipping Sacks

The present invention further relates to a heavy duty shipping sack (HDSS) comprising the multilayer film as described herein. It is preferred when the HDSS comprises at least 70 wt.-%, more preferably at least 85 wt.-%, more preferably at least 95 wt.-% of the multilayer film according to the present invention. It is the most preferred when the heavy duty shipping sack (HDSS) consists of the multilayer film as described herein, i.e. is made of the multilayer film according to the present invention.

### EXAMPLES

### A. Measurement Methods

### Melt Flow Rate

The melt flow rate (MFR) was determined according to ISO 1133 and is indicated in g/10 min. The higher the melt flow rate, the lower the viscosity of the polymer. The MFR was determined at 190 °C for polyethylene and at a loading of 2.16 kg (MFR₂), 5.00 kg (MFR₅) or 21.6 kg (MFR₂₁).

In the case of the terpolymer (TP1) according to the present invention, where the terpolymer was produced in a loop-loop-gas phase reactor setup as given in the Examples section, the MFR₂ (190 °C) of the second loop fraction can be calculated according to the formula below: $MFR \left(B\right) = {10}^{\left[\frac{log \left(MFR\left(C\right)\right) - w \left(A\right) xlog \left(MFR\left(A\right)\right)}{w \left(B\right)}\right]}$ (I) wherein
w(A) is the weight fraction in [wt.-%] of the first loop fraction (A),
w(B) is the weight fraction in [wt.-%] of second loop fraction (B),
MFR(C) is melt flow rate MFR₂ (190 °C) in [g/10 min] of the polymer produced in the second loop (C), which is the combination of first (A) and the second (B) loop fraction (it is measured),
MFR(A) is melt flow rate MFR₂ (190 °C) in [g/10 min] of the first loop fraction (A),
MFR(B) is melt flow rate MFR₂ (190 °C) in [g/10 min] of the second loop fraction (B).

### Density

Density of the polymers was measured according to ISO 1183-1:2019 (method A) on compression moulded specimens prepared according to EN ISO 1872-2 (Feb 2007) and is given in kg/m³.

### Dart Drop Impact

The dart drop impact (DDI) was determined according to ASTM D1709 "method "A" on films with a thickness as indicated and produced as described below under "Examples" (blown films with a thickness of 110 µm).

### Tensile Modulus

Tensile modulus in machine and transverse direction (MD and TD, respectively) were determined acc. to ISO 527-3 on blown films with a thickness of 110 µm at a cross head speed of 1 mm/min for the blown film of the examples.

### Relative Tear resistance (determined by Elmendorf tear (N/mm))

The tear strength or tear resistance was measured using the ISO 6383/2 method. The force required to propagate tearing across a film specimen is measured using a pendulum device. The pendulum swings under gravity through an arc, tearing the specimen from a pre-cut slit. The specimen is fixed on one side by the pendulum and on the other side by a stationary clamp. The tear strength or tear resistance is the force required to tear the specimen. The relative tear resistance (N/mm) can be calculated by dividing the tear resistance by the thickness of the film. The films were produced as described below in the film preparation example (blown films with 110 µm). The tear strength or tear resistance is measured in machine direction (MD) and/or transverse direction (TD).

### B. Examples

### Materials

Anteo^{™} FK1820 is a bimodal terpolymer LLDPE that is commercially available from Borealis with a density of 918 kg/m³ and an MFR₂ of 1.5 g/10 min.

Borstar^{®} FB5600 is a bimodal high density polyethylene that is commercially available from Borealis with a density of 958 kg/m³ and an MFR₂ of 0.7 g/10 min.

Borstar^{®} FB3450 is a bimodal polyethylene that is commercially available from Borealis with a density of 945 kg/m³ and an MFR₂ of 0.3 g/10 min.

NAV101 is a post-consumer recyclate (PCR) LDPE that is commercially available by Ecoplast with a density of 925 kg/m³ and an MFR₂ of 0.5 g/10 min.

PPA is polymer processing aid masterbatch POLYBATCH^{®} AMF 905 that is commercially available by LyondellBasell.

White MB is rutile titanium dioxide POLYWHITE^{®} NG 8600 H 1 that is commercially available by LyondellBasell.

TP1 is trimodal ethylene terpolymer that was produced as detailed in following.

### Process for TP1

Trimodal ethylene/1-butene/1-hexene terpolymer was produced in a setup of loop-loop-gas phase reactors, with pre-polymerization step prior to the first loop polymerization. The production conditions are detailed hereinbelow.

A loop reactor having a volume of 50 dm³ was operated at a temperature of 70 °C and a pressure of 57 bar. Into the reactor were fed ethylene, propane diluent, 1-butene as a comonomer and hydrogen. Also, a solid polymerization catalyst component produced as described in Example 1 of EP 1378528 was introduced into the reactor together with triethylaluminium cocatalyst so that the molar ratio of Al/Ti was about 15. The estimated production split was about 2 wt.-%.

A stream of slurry was continuously withdrawn and directed to a loop reactor having a volume of 150 dm³ and which was operated at a temperature of 95 °C and a pressure of 56 bar. Into the reactor were further fed additional ethylene, propane diluent and hydrogen so that the ethylene concentration in the fluid mixture was 4.7 mol-% and the molar ratio of hydrogen to ethylene was 306 mol/kmol. The estimated production split was 18 wt.-%. The ethylene homopolymer withdrawn from the reactor had MFR₂ of 195 g/10 min.

A stream of slurry from the reactor was withdrawn intermittently and directed into a loop reactor having a volume of 350 dm³ and which was operated at 95 °C temperature and 54 bar pressure. Into the reactor was further added a fresh propane, ethylene, and hydrogen so that the ethylene content in the fluid mixture was 5.5 mol-% and the molar ratio of hydrogen to ethylene was 563 mol/kmol. The estimated production split was 26 wt.-%. The ethylene homopolymer withdrawn from the reactor had MFR₂ of 390 g/10 min.

The slurry was withdrawn from the loop reactor intermittently and directed to a flash vessel operated at a temperature of 50 °C and a pressure of 3 bar. From there the polymer was directed to a fluidized bed gas phase reactor operated at a pressure of 20 bar and a temperature of 82 °C. Additional ethylene, 1-butene and 1-hexene comonomer, nitrogen as inert gas and hydrogen were added so that the ethylene content in the reaction mixture was 13.3 mol-% and the molar ratio of 1-butene to ethylene was 92.1 mol/kmol and the molar ratio of 1-hexene to ethylene was 121.8 mol/kmol. The estimated production split was 54 wt.-%.

The polymer powder was mixed under nitrogen atmosphere with 1200 ppm of Irganox B561 and 400 ppm Ca-stearate. Then it was compounded and extruded under nitrogen atmosphere to pellets by using a JSW CIMP90 twin screw extruder. Final properties of TP1 are reported in Table 1.

**Table 1. Properties of TP1**

| | |
|---|---|
| Measured Loop1 MFR₂ (g/10 min) | 195 |
| Loop1 split including prepoly (%) | 20 |
| Measured Loop1+2 MFR₂ (g/10 min) | 390 |
| Loop2 split (%) | 26 |
| Calculated Loop2 MFR₂ (g/10 min) | 665 |
| GPR split (%) | 54 |
| Pellet density (kg/m³) | 940.7 |
| Pellet MFR₂ (g/10 min) | 0.35 |
| Pellet MFR₅ (g/10 min) | 1.45 |
| Pellet MFR₂₁ (g/10 min) | 32.3 |
| Total split (%) | 100 |

### Multilayer film

All film structures were produced on Alpine Hosokawa film line. All film structures were produced in the same processing conditions (BUR of 2.5:1, thickness 110 micrometers, die-gap of 1.5 mm, die diameter 200 mm, throughput of 180 kg/h, lower neck-height, external bubble cooling).

The structure of the multilayer films produced are given in Table 2 below, while the composition of each layer is presented in Table 3.

**Table 2. Layer structures of the examples**

| **Film** | **O1 (%)** | **S1 (%)** | **C (%)** | **S2 (%)** | **O2 (%)** |
|---|---|---|---|---|---|
| **IE1** | 15 | 20 | 30 | 20 | 15 |
| **IE2** | 17 | - | 66 | - | 17 |
| **IE3** | 17 | - | 66 | - | 17 |
| **CE1** | 17 | - | 66 | - | 17 |
| **CE2** | 17 | - | 66 | - | 17 |

**Table 3. Composition of layers (overall film thickness is 110µm)**

| **Example** | **Layer structure/perc entage in film %** | **O1/O2 Composition: Polymers/amount wt.-%** | | **C Composition: Polymers/amount wt.-%** | | **S1/S2 Composition: Polymers/amount wt.-%** | |
|---|---|---|---|---|---|---|---|
| **IE1** | O1/S1/C/S2/O2 | TP1 | 65 | TP1 | 31 | TP1 | 60 |
| | | FK1820 | 30 | | | NAV101 | 35 |
| | | PPA | 1 | NAV101 | 64 | White MB | 5 |
| | | White MB | 4 | White MB | 5 | | |
| **IE2** | O1/C/O2 | TP1 | 65 | | | - | - |
| | | FK1820 | 30 | TP1 | 10 | | |
| | | PPA | 1 | FB5600 | 35 | | |
| | | White MB | 4 | NAV101 | 55 | | |
| **IE3** | O1/C/O2 | TP1 | 60 | | | - | - |
| | | FK1820 | 35 | TP1 | 45 | | |
| | | PPA | 1 | NAV101 | 55 | | |
| | | White MB | 4 | | | | |
| **CE1** | O1/C/O2 | FK1820 | 40 | | | - | - |
| | | | | FB5600 | 20 | | |
| | | FB3450 | 55 | NAV101 | 55 | | |
| | | PPA | 1 | FB3450 | 25 | | |
| | | White MB | 4 | | | | |
| **CE2** | O1/C/O2 | TP1 | 55 | | | - | - |
| | | FK1820 | 40 | TP1 | 80 | | |
| | | PPA | 1 | FB5600 | 20 | | |
| | | White MB | 4 | | | | |

Table 4 below gives the properties of films (measured on blown films with a thickness of 110 µm) produced according to the recipes given in Table 3.

**Table 4. Performance of multilayer films**

| **Property** | **Unit** | **IE1** | **IE2** | **IE3** | **CE1** | **CE2** |
|---|---|---|---|---|---|---|
| Dart drop impact (DDI) | g | 170 | 162 | 161 | 156 | 382 |
| Tear Elmendorf resistance in MD | N/mm | 120.4 | 31.8 | 74.4 | 35.9 | 35.2 |
| Tear Elmendorf resistance in TD | N/mm | 319.5 | 285.7 | 308.3 | 234.5 | 264 |
| Tensile modulus in MD | MPa | 447.7 | 491.8 | 425.2 | 458.6 | 636.1 |
| Tensile modulus in TD | MPa | 571.7 | 634.2 | 538.1 | 592.8 | 827.9 |

It is already well established response that adding recyclate to the multilayer structures lowers the stiffness and toughness. However, as evident from Table 3, the inventors have found that the multilayer films according to the inventive examples having recyclate content in the core layer even exhibit a higher tear resistance, and exhibit comparable mechanical properties compared to CE2 without any recyclate content. Comparing CE1 having a recyclate content with the inventive examples where the core layer additionally comprises TP1, it can be seen that multilayer films exhibit better mechanical properties in terms of DDI, tear resistance and tensile modulus.

## Claims

1. A multilayer film, comprising:
**A)** a first outer layer (O1) and a second outer layer (O2), wherein the first (O1) and/or second (O2) outer layers comprise(s)
**A1)** a bimodal ethylene terpolymer, with a density of from 910 to 930 kg/m³ determined according to ISO 1183 and an MFR₂ measured according to ISO 1133 (190 °C, 2.16 kg) from 0.5 to 10 g/10 min, comprising at least a C₄-C₁₂ alpha-olefin comonomer, and
**A2)** a first multimodal ethylene copolymer (CP1), with a density of from 930 to 950 kg/m³ determined according to ISO 1183 and an MFR₅ measured according to ISO 1133 (190 °C, 5.00 kg) from 0.5 to 10 g/10 min, comprising at least a first C₄-C₁₂ alpha-olefin comonomer,
**B)** a core layer (C), sandwiched between the first (O1) and the second (O2) outer layers, wherein the core layer (C) comprises
**B1)** a recycled LDPE with a density of from 910 to 940 kg/m³ determined according to ISO 1183 and an MFR₂ measured according to ISO 1133 (190 °C, 2.16 kg) from 0.1 to 10 g/10 min, and
**B2)** a second multimodal ethylene copolymer (CP2), with a density of from 930 to 950 kg/m³ determined according to ISO 1183 and an MFR₅ measured according to ISO 1133 (190 °C, 5.00 kg) from 0.5 to 10 g/10 min, comprising at least a first C₄-C₁₂ alpha-olefin comonomer
wherein the first multimodal ethylene copolymer (CP1) and/or the second multimodal ethylene copolymer (CP2) is/are trimodal comprising:
- a first ethylene homopolymer in an amount from 10 to 30 wt.-%, more preferably from 15 to 25 wt.-%;
- a second ethylene homopolymer having an MFR₂ which is at least 50 g/10 min higher than the MFR₂ of component a), measured according to ISO 1133 (190 °C, 2.16 kg), in an amount from 15 to 35 wt.-%, more preferably from 20 to 30 wt.-%; and
- a third ethylene copolymer with at least a first C₄-C₁₂ alpha-olefin comonomer, in an amount from 35 to 75 wt.-%, more preferably from 45 to 65 wt.-%;
wherein the amounts are based on the total weight of the first multimodal ethylene copolymer (CP1) and/or the second multimodal ethylene copolymer (CP2).

2. The multilayer film according to claim 1, wherein the first multimodal ethylene copolymer (CP1) and the second multimodal ethylene copolymer (CP2) have the same composition.

3. The multilayer film according to any of the preceding claims, wherein the first C₄-C₁₂ alpha-olefin comonomer of the first multimodal ethylene copolymer (CP1) and/or the second multimodal ethylene copolymer (CP2) is 1-butene.

4. The multilayer film according to any of the preceding claims, wherein the first multimodal ethylene copolymer (CP1) and/or the second multimodal ethylene copolymer (CP2) comprise(s) a second C₆-C₂₀ alpha-olefin comonomer, preferably 1-hexene.

5. The multilayer film according to any of the preceding claims, wherein the MFR₂ of the first multimodal ethylene copolymer (CP1) and/or the second multimodal ethylene copolymer (CP2), measured according to ISO 1133 (190 °C, 2.16 kg), is from 0.1 to 3.0 g/10 min, more preferably from 0.2 to 1.5 g/10 min, and most preferably from 0.25 to 0.80 g/10 min.

6. The multilayer film according to any of the preceding claims, wherein the MFR₂₁ of the first multimodal ethylene copolymer (CP1) and/or the second multimodal ethylene copolymer (CP2), measured according to ISO 1133 (190 °C, 21.6 kg), is from 5 to 100 g/10 min, more preferably from 10 to 80 g/10 min, and most preferably from 20 to 60 g/10 min.

7. The multilayer film according to any of the preceding claims, wherein the amount of the first ethylene copolymer (CP1) in the first (O1) and/or the second (O2) outer layer(s) is from 50 to 90 wt.-%, more preferably from 55 to 80 wt.-%, and most preferably from 62 to 75 wt.-%, based on the total weight of the first (O1) and/or the second (O2) outer layer(s).

8. The multilayer film according to any of the preceding claims, wherein the core layer (C) comprises:
a) the recycled LDPE in an amount from 30 to 90 wt.-%, more preferably from 45 to 80 wt.-% based on the total weight of the core layer (C), and
b) the second multimodal ethylene copolymer (CP2) in an amount from 5 to 70 wt.-%, more preferably from 7 to 55 wt.-% based on the total weight of core layer (C).

9. The multilayer film according to any of the preceding claims, wherein the C₄-C₁₂ alpha-olefin comonomer of the bimodal ethylene terpolymer is 1-butene.

10. The multilayer film according to claim 9, wherein the bimodal ethylene terpolymer is a terpolymer of ethylene/1-butene/1-hexene.

11. The multilayer film according to any of the preceding claims, further comprising a first sub-skin layer (S1) and a second sub-skin layer (S2) placed between the core layer (C) and the first (O1) and the second (O2) outer layers respectively.

12. The multilayer film according to claim 11, wherein the first sub-skin layer (S1) and/or the second sub-skin layer (S2) comprise(s):
a) the recycled LDPE with a density of from 910 to 940 kg/m³ determined according to ISO 1183 and an MFR₂ measured according to ISO 1133 (190 °C, 2.16 kg) from 0.1 to 10 g/10 min, and
b) the second multimodal ethylene copolymer (CP2), with a density of from 930 to 950 kg/m³ determined according to ISO 1183 and an MFR₅ measured according to ISO 1133 (190 °C, 5.00 kg) from 0.5 to 10 g/10 min, comprising at least a first C₄-C₁₂ alpha-olefin comonomer.

13. The multilayer film according to any of the preceding claims, wherein the film has a relative tear resistance in machine direction (MD) determined on a 110 µm blown film according to ISO 6383/2 from 20 to 250 N/mm, more preferably from 25 to 150 N/mm and/or a relative tear resistance in transverse direction (TD) determined on a 110 µm blown film according to ISO 6383/2 from 200 to 450 N/mm, more preferably from 270 to 400 N/mm.

14. The multilayer film according to any of the preceding claims, wherein the film has a tensile modulus in machine direction (MD) determined on a 110 µm blown film according to ISO 527-3 from 350 to 580 MPa, more preferably from 400 to 550 MPa and/or a tensile modulus in transverse direction (TD) determined on a 110 µm blown film according to ISO 527-3 from 400 to 700 MPa, more preferably from 500 to 650 MPa.

15. A heavy duty shipping sack (HDSS) comprising the multilayer film according to any of the claims 1 to 14.

## Patentansprüche

1. Mehrschichtfolie, umfassend:
**A)** eine erste äußere Schicht (O1) und eine zweite äußere Schicht (O2), wobei die erste (O1) und/oder die zweite (O2) äußere Schicht
**A1)** ein bimodales Ethylen-Terpolymer mit einer Dichte von 910 bis 930 kg/m³, bestimmt gemäß ISO 1183, und einer MFR₂, gemessen gemäß ISO 1133 (190 °C, 2,16 kg), von 0,5 bis 10 g/10 min, umfassend mindestens ein C₄-C₁₂-Alpha-Olefin-Comonomer, und
**A2)** ein erstes multimodales Ethylen-Copolymer (CP1) mit einer Dichte von 930 bis 950 kg/m³, bestimmt gemäß ISO 1183, und einer MFR₅, gemessen gemäß ISO 1133 (190 °C, 5,00 kg), von 0,5 bis 10 g/10 min, umfassend mindestens ein erstes C₄-C₁₂-Alpha-Olefin-Comonomer, umfasst/umfassen,
**B)** eine Kernschicht (C), die sandwichartig zwischen der ersten (O1) und der zweiten (O2) äußeren Schicht angeordnet ist, wobei die Kernschicht (C)
**B1)** ein recyceltes LDPE mit einer Dichte von 910 bis 940 kg/m³, bestimmt gemäß ISO 1183, und einer MFR₂, gemessen gemäß ISO 1133 (190 °C, 2,16 kg), von 0,1 bis 10 g/10 min, und
**B2)** ein zweites multimodales Ethylen-Copolymer (CP2) mit einer Dichte von 930 bis 950 kg/m³, bestimmt gemäß ISO 1183, und einer MFR₅, gemessen gemäß ISO 1133 (190 °C, 5,00 kg), von 0,5 bis 10 g/10 min, umfassend mindestens ein erstes C₄-C₁₂-Alpha-Olefin-Comonomer, umfasst,
wobei das erste multimodale Ethylen-Copolymer (CP1) und/oder das zweite multimodale Ethylen-Copolymer (CP2) trimodal ist/sind, umfassend:
- ein erstes Ethylen-Homopolymer in einer Menge von 10 bis 30 Gew.-%, vorzugsweise von 15 bis 25 Gew.-%;
- ein zweites Ethylen-Homopolymer mit einer MFR₂, die mindestens 50 g/10 min höher ist als die MFR₂ der Komponente a), gemessen gemäß ISO 1133 (190 °C, 2,16 kg), in einer Menge von 15 bis 35 Gew.-%, vorzugsweise von 20 bis 30 Gew.-%; und
- ein drittes Ethylen-Copolymer mit mindestens einem ersten C₄-C₁₂-Alpha-Olefin-Comonomer, in einer Menge von 35 bis 75 Gew.-%, vorzugsweise von 45 bis 65 Gew.-%;
wobei sich die Mengen auf das Gesamtgewicht des ersten multimodalen Ethylen-Copolymers (CP1) und/oder des zweiten multimodalen Ethylen-Copolymers (CP2) beziehen.

2. Mehrschichtfolie nach Anspruch 1, wobei das erste multimodale Ethylen-Copolymer (CP1) und das zweite multimodale Ethylen-Copolymer (CP2) die gleiche Zusammensetzung aufweisen.

3. Mehrschichtfolie nach einem der vorhergehenden Ansprüche, wobei das erste C₄-C₁₂-Alpha-Olefin-Comonomer des ersten multimodalen Ethylen-Copolymers (CP1) und/oder des zweiten multimodalen Ethylen-Copolymers (CP2) 1-Buten ist.

4. Mehrschichtfolie nach einem der vorhergehenden Ansprüche, wobei das erste multimodale Ethylen-Copolymer (CP1) und/oder das zweite multimodale Ethylen-Copolymer (CP2) ein zweites C₆-C₂₀-Alpha-Olefin-Comonomer, vorzugsweise 1-Hexen, umfasst/umfassen.

5. Mehrschichtfolie nach einem der vorhergehenden Ansprüche, wobei die MFR₂ des ersten multimodalen Ethylen-Copolymers (CP1) und/oder des zweiten multimodalen Ethylen-Copolymers (CP2), gemessen gemäß ISO 1133 (190 °C, 2,16 kg), 0,1 bis 3,0 g/10 min, vorzugsweise 0,2 bis 1,5 g/10 min und am meisten bevorzugt 0,25 bis 0,80 g/10 min ist.

6. Mehrschichtfolie nach einem der vorhergehenden Ansprüche, wobei die MFR₂₁ des ersten multimodalen Ethylen-Copolymers (CP1) und/oder des zweiten multimodalen Ethylen-Copolymers (CP2), gemessen gemäß ISO 1133 (190 °C, 21,6 kg), 5 bis 100 g/10 min, vorzugsweise 10 bis 80 g/10 min und am meisten bevorzugt 20 bis 60 g/10 min ist.

7. Mehrschichtfolie nach einem der vorhergehenden Ansprüche, wobei die Menge des ersten Ethylen-Copolymers (CP1) in der ersten (O1) und/oder der zweiten (O2) äußeren Schicht(en) 50 bis 90 Gew.-%, vorzugsweise 55 bis 80 Gew.-% und am meisten bevorzugt 62 bis 75 Gew.-% beträgt, bezogen auf das Gesamtgewicht der ersten (O1) und/oder der zweiten (O2) äußeren Schicht(en).

8. Mehrschichtfolie nach einem der vorhergehenden Ansprüche, wobei die Kernschicht (C) umfasst:
a) das recycelte LDPE in einer Menge von 30 bis 90 Gew.-%, vorzugsweise von 45 bis 80 Gew.-%, bezogen auf das Gesamtgewicht der Kernschicht (C), und
b) das zweite multimodale Ethylen-Copolymer (CP2) in einer Menge von 5 bis 70 Gew.-%, vorzugsweise von 7 bis 55 Gew.-%, bezogen auf das Gesamtgewicht der Kernschicht (C).

9. Mehrschichtfolie nach einem der vorhergehenden Ansprüche, wobei das C₄-C₁₂-Alpha-Olefin-Comonomer des bimodalen Ethylen-Terpolymers 1-Buten ist.

10. Mehrschichtfolie nach Anspruch 9, wobei das bimodale Ethylen-Terpolymer ein Terpolymer aus Ethylen/1-Buten/1-Hexen ist.

11. Mehrschichtfolie nach einem der vorhergehenden Ansprüche, die ferner eine erste Unterhautschicht (S1) und eine zweite Unterhautschicht (S2) umfasst, die zwischen der Kernschicht (C) und der ersten (O1) bzw. der zweiten (O2) äußeren Schicht platziert sind.

12. Mehrschichtfolie nach Anspruch 11, wobei die erste Unterhautschicht (S1) und/oder die zweite Unterhautschicht (S2) umfasst/umfassen:
a) das recycelte LDPE mit einer Dichte von 910 bis 940 kg/m³, bestimmt gemäß ISO 1183, und einer MFR₂, gemessen gemäß ISO 1133 (190 °C, 2,16 kg), von 0,1 bis 10 g/10 min, und
b) das zweite multimodale Ethylen-Copolymer (CP2) mit einer Dichte von 930 bis 950 kg/m³, bestimmt gemäß ISO 1183, und einer MFR₅, gemessen gemäß ISO 1133 (190 °C, 5,00 kg), von 0,5 bis 10 g/10 min, umfassend mindestens ein erstes C₄-C₁₂-Alpha-Olefin-Comonomer.

13. Mehrschichtfolie nach einem der vorhergehenden Ansprüche, wobei die Folie eine relative Reißfestigkeit in Maschinenrichtung (MD), bestimmt an einer 110 µm Blasfolie gemäß ISO 6383/2, von 20 bis 250 N/mm, vorzugsweise von 25 bis 150 N/mm und/oder eine relative Reißfestigkeit in Querrichtung (TD), bestimmt an einer 110 µm Blasfolie gemäß ISO 6383/2, von 200 bis 450 N/mm, vorzugsweise von 270 bis 400 N/mm, aufweist.

14. Mehrschichtfolie nach einem der vorhergehenden Ansprüche, wobei die Folie einen Zugmodul in Maschinenrichtung (MD), bestimmt an einer 110 µm Blasfolie gemäß ISO 527-3, von 350 bis 580 MPa, vorzugsweise von 400 bis 550 MPa und/oder einen Zugmodul in Querrichtung (TD), bestimmt an einer 110 µm Blasfolie gemäß ISO 527-3, von 400 bis 700 MPa, vorzugsweise von 500 bis 650 MPa, aufweist.

15. Schwerlast-Versandsack (HDSS), umfassend die Mehrschichtfolie nach einem der Ansprüche 1 bis 14.

## Revendications

1. Film multicouche, comprenant :
**A)** une première couche extérieure (O1) et une deuxième couche extérieure (O2), les première (O1) et/ou deuxième (O2) couches extérieures comprenant
**A1)** un terpolymère d'éthylène bimodal, présentant une densité de 910 à 930 kg/m³, déterminée selon la norme ISO 1183, et un MFR₂, mesuré selon la norme ISO 1133 (190 °C, 2,16 kg), de 0,5 à 10 g/10 min, comprenant au moins un comonomère d'alpha-oléfine en C₄-C₁₂, et
**A2)** un premier copolymère d'éthylène multimodal (CP1), présentant une densité de 930 à 950 kg/m³, déterminée selon la norme ISO 1183, et un MFR₅, mesuré selon la norme ISO 1133 (190 °C, 5,00 kg), de 0,5 à 10 g/10 min, comprenant au moins un premier comonomère d'alpha-oléfine en C₄-C₁₂,
**B)** une couche centrale (C), prise en sandwich entre la première (O1) et la deuxième (O2) couches extérieures, la couche centrale (C) comprenant
**B1)** un LDPE recyclé présentant une densité de 910 à 940 kg/m³, déterminée selon la norme ISO 1183, et un MFR₂, mesuré selon la norme ISO 1133 (190 °C, 2,16 kg), de 0,1 à 10 g/10 min, et
**B2)** un deuxième copolymère d'éthylène multimodal (CP2), présentant une densité de 930 à 950 kg/m³, déterminée selon la norme ISO 1183, et un MFR₅, mesuré selon la norme ISO 1133 (190 °C, 5,00 kg), de 0,5 à 10 g/10 min, comprenant au moins un premier comonomère d'alpha-oléfine en C₄-C₁₂,
dans lequel le premier copolymère d'éthylène multimodal (CP1) et/ou le deuxième copolymère d'éthylène multimodal (CP2) est/sont trimodal, comprenant :
- un premier homopolymère d'éthylène en une quantité de 10 à 30 % en poids, de préférence de 15 à 25 % en poids ;
- un deuxième homopolymère d'éthylène présentant un MFR₂ supérieur d'au moins 50 g/10 min au MFR₂ du composant a), mesuré selon la norme ISO 1133 (190 °C, 2,16 kg), en une quantité de 15 à 35 % en poids, de préférence de 20 à 30 % en poids ; et
- un troisième copolymère d'éthylène présentant au moins un premier comonomère d'alpha-oléfine en C₄-C₁₂, en une quantité de 35 à 75 % en poids, de préférence de 45 à 65 % en poids ;
dans lequel les quantités sont basées sur le poids total du premier copolymère d'éthylène multimodal (CP1) et/ou du deuxième copolymère d'éthylène multimodal (CP2).

2. Film multicouche selon la revendication 1, dans lequel le premier copolymère d'éthylène multimodal (CP1) et le deuxième copolymère d'éthylène multimodal (CP2) ont la même composition.

3. Film multicouche selon l'une quelconque des revendications précédentes, dans lequel le premier comonomère d'alpha-oléfine en C₄-C₁₂ du premier copolymère d'éthylène multimodal (CP1) et/ou du deuxième copolymère d'éthylène multimodal (CP2) est le 1-butène.

4. Film multicouche selon l'une quelconque des revendications précédentes, dans lequel le premier copolymère d'éthylène multimodal (CP1) et/ou le deuxième copolymère d'éthylène multimodal (CP2) comprend/comprennent un deuxième comonomère d'alpha-oléfine en C₆-C₂₀, de préférence le 1-hexène.

5. Film multicouche selon l'une quelconque des revendications précédentes, dans lequel le MFR₂ du premier copolymère d'éthylène multimodal (CP1) et/ou du deuxième copolymère d'éthylène multimodal (CP2), mesuré selon la norme ISO 1133 (190 °C, 2,16 kg), est de 0,1 à 3,0 g/10 min, de préférence de 0,2 à 1,5 g/10 min, et encore plus préférentiellement de 0,25 à 0,80 g/10 min.

6. Film multicouche selon l'une quelconque des revendications précédentes, dans lequel le MFR₂₁ du premier copolymère d'éthylène multimodal (CP1) et/ou du deuxième copolymère d'éthylène multimodal (CP2), mesuré selon la norme ISO 1133 (190 °C, 21,6 kg), est de 5 à 100 g/10 min, de préférence de 10 à 80 g/10 min, et encore plus préférentiellement de 20 à 60 g/10 min.

7. Film multicouche selon l'une quelconque des revendications précédentes, dans lequel la teneur en premier copolymère d'éthylène (CP1) dans la première (O1) et/ou la deuxième (O2) couche(s) extérieure(s) est de 50 à 90 % en poids, de préférence de 55 à 80 % en poids, et encore plus préférentiellement de 62 à 75 % en poids, par rapport au poids total de la première (O1) et/ou de la deuxième (O2) couche(s) extérieure(s).

8. Film multicouche selon l'une quelconque des revendications précédentes, dans lequel le couche centrale (C) comprend :
a) le LDPE recyclé en une quantité de 30 à 90 % en poids, de préférence de 45 à 80 % en poids, par rapport au poids total de la couche centrale (C), et
b) le deuxième copolymère d'éthylène multimodal (CP2) en une quantité de 5 à 70 % en poids, de préférence de 7 à 55 % en poids, par rapport au poids total de la couche centrale (C).

9. Film multicouche selon l'une quelconque des revendications précédentes, dans lequel le comonomère d'alpha-oléfine en C₄-C₁₂ du terpolymère d'éthylène bimodal est le 1-butène.

10. Film multicouche selon la revendication 9, dans lequel le terpolymère d'éthylène bimodal est un terpolymère d'éthylène/1-butène/1-hexène.

11. Film multicouche selon l'une quelconque des revendications précédentes, comprenant en outre une première couche de sous-peau (S1) et une deuxième couche de sous-peau (S2) placées respectivement entre la couche centrale (C) et les première (O1) et deuxième (O2) couches extérieures.

12. Film multicouche selon la revendication 11, dans lequel la première couche de sous-peau (S1) et/ou la deuxième couche de sous-peau (S2) comprend/comprennent :
a) le LDPE recyclé présentant une densité de 910 à 940 kg/m³, déterminée selon la norme ISO 1183, et un MFR₂, mesuré selon la norme ISO 1133 (190 °C, 2,16 kg), de 0,1 à 10 g/10 min, et
b) le deuxième copolymère d'éthylène multimodal (CP2), présentant une densité de 930 à 950 kg/m³, déterminée selon la norme ISO 1183, et un MFR₅, mesuré selon la norme ISO 1133 (190 °C, 5,00 kg), de 0,5 à 10 g/10 min, comprenant au moins un premier comonomère d'alpha-oléfine en C₄-C₁₂.

13. Film multicouche selon l'une quelconque des revendications précédentes, dans lequel le film présente une résistance au déchirement relative dans le sens machine (MD), déterminée sur un film soufflé de 110 µm selon la norme ISO 6383/2, de 20 à 250 N/mm, de préférence de 25 à 150 N/mm et/ou une résistance au déchirement relative dans le sens transversal (TD), déterminée sur un film soufflé de 110 µm selon la norme ISO 6383/2, de 200 à 450 N/mm, de préférence encore de 270 à 400 N/mm.

14. Film multicouche selon l'une quelconque des revendications précédentes, dans lequel le film présente un module de traction dans le sens machine (MD), déterminé sur un film soufflé de 110 µm selon la norme ISO 527-3, de 350 à 580 MPa, de préférence de 400 à 550 MPa et/ou un module de traction dans le sens transversal (TD), déterminé sur un film soufflé de 110 µm selon la norme ISO 527-3, de 400 à 700 MPa, de préférence encore de 500 à 650 MPa.

15. Sac de transport à haute résistance (HDSS) comprenant le film multicouche selon l'une quelconque des revendications 1 à 14.
